# EUROPEAN PATENT APPLICATION

(11) **EP 2 362 178 A1**
(43) Date of publication of application: **31.08.2011**
(21) Application number: 09823717.5
(22) Date of filing: 02.11.2009
(51) Int. Cl.: G01B 7/28, B60R 21/055, G01B 7/00

(54) **CAPACITANCE-TYPE SENSOR**

(30) Priority: 31.10.2008 JP 2008281673
(71) Applicant: FUJIKURA LTD., Tokyo 135-8512 (JP)
(72) Inventor: YAMAGUCHI,Yuichiro, Sakura-shi Chiba 285-8550 (JP); ICHIHARA, Koichi, Sakura-shi Chiba 285-8550 (JP); SAKURAI, Ryohei, Sakura-shi Chiba 285-8550 (JP)
(74) Representative: Grünecker, Kinkeldey, Stockmair & Schwanhäusser Anwaltssozietät
(86) International application number: PCT/JP2009/068762
(87) International publication number: WO 2010/050607

(57) **Abstract**

To measure the distance between a sensing target and sensors accurately by suppressing differences in amount of change in outputs from sensors and differences in initial capacitances thereof and detect the sensing target highly accurately, capacitance-type sensor includes: sensor electrodes 1 to 5 configuring a sensor electrode group 6; and a pair of guard electrodes 28a and 28b. The sensor electrodes 1 to 5 are driven being supplied with a sensor potential or a guard potential, and the guard electrodes 28a and 28b are driven being supplied with the guard potential. Even when the outermost sensor electrode 1 or 5 of the sensor electrode group 6 is activated, the amount of change in the outputs from the sensor electrodes 1 to 5 configuring the sensor electrode group 6 and their capacitance values can be made substantially uniform because the guard electrodes 28a and 28b are driven at the guard potential.

## Description

### Technical Field

The present invention relates to a capacitance-type sensor which senses a capacitance with respect to a sensing target existing in a sensing area, and particularly to a capacitance-type sensor which can sense the position of the sensing target in the sensing area highly precisely.

### Background Art

The followings have been conventionally known as techniques for sensing a sensing target (an object, etc.) existing in a sensing area. That is, a headrest driving device disclosed in Patent Document 1 identified below includes: support means which supports a headrest movably; driving means which drives the headrest reciprocatingly; a plurality of detecting electrodes (sensing electrodes) which are provided inside an external cover of the headrest at a portion for supporting a head and at a distance from each other; capacitance detecting means which detects capacitances formed by these plurality of detecting electrodes with respect to a common potential line; and position controlling means which controls the driving means to drive the headrest to move in a direction to bring the capacitances into balance.

According to this headrest driving device, the headrest is driven by the driving means controlled by the position controlling means in such a way that the head comes to be located at the middle position between the plurality of detecting electrodes, in other words, in such a way that the headrest is moved in accordance with the movement of the head, whereby the position of the headrest is adjusted automatically.

A device for adjusting a headrest disclosed in Patent Document 2 identified below is configured by a sensor including two capacitor plates which are provided inside the headrest for sensing the position of the head of a vehicle occupant. These two capacitor plates are arranged one above the other inside the headrest.

As far as a sensor signal from one capacitor plate increases while at the same time a sensor signal from the other capacitor plate decreases, a position of the headrest in height is adjusted in such a manner as to be changed from a home position where the headrest is retracted.

A headrest adjusting device disclosed in Patent Document 3 identified below includes: a headrest provided above a seat back (backrest) to be movable upward and downward by being driven by a motor; a head detecting sensor which detects the position of the head of a sitting person (vehicle occupant); and a CPU which adjusts the height of the headrest to match the position of the head of the sitting person based on a signal from the head detecting sensor.

This headrest adjusting device starts the operation of adjusting the headrest when the CPU senses an electrical conduction of an ignition switch, a sitting sensor senses sitting, and a seatbelt buckle switch senses fastening of a seatbelt of the vehicle.

An object detecting device disclosed in Patent Document 4 identified below includes a sensor electrode unit which is formed by inserting a plurality of sensor electrodes arranged at regular intervals into a resin and insert-molding the electrodes. This sensor electrode unit is hollow, has a generally rectangular cross-sectional shape, and has the sensor electrodes provided on at least one side of the rectangle, which improves the latitude of installation while maintaining the detection performance.

Patent Document 1: JPS64-11512A
Patent Document 2: JP2000-309242A
Patent Document 3: JPH11-180200A
Patent Document 4: JPH11-213296A

### Disclosure of Invention

### Problem to be Solved by the Invention

However, the headrest driving device disclosed in Patent Document 1 identified above adjusts the position of the headrest based on capacitances between the headrest and a ceiling portion, etc. of a vehicle. The device for adjusting a headrest disclosed in Patent Document 2 identified above measures capacitances between a head and sensing electrodes by means of two or three capacitor plates and uses the capacitances for position adjustment.

The headrest position adjusting device disclosed in Patent Document 3 identified above performs position adjustment for the headrest according to results of adjustments of each portion of the seat. The object detecting device disclosed in Patent Document 4 identified above can sense capacitances by means of the sensor electrodes stably if, for example, the middle position among the plurality of sensor electrodes faces the exact center of a sensing target.

As can be understood, the conventional techniques have to sense an object by comparing the outputs from the sensors for balancing them or comparing the peaks of the outputs from the sensing electrodes. According to such sensing methods, the initial capacitances of the sensing electrodes (i.e., the capacitance values when no sensing target is existing) and the sensing sensitivities thereof might greatly vary depending on, for example, the positions at which the plurality of sensing electrodes are provided.

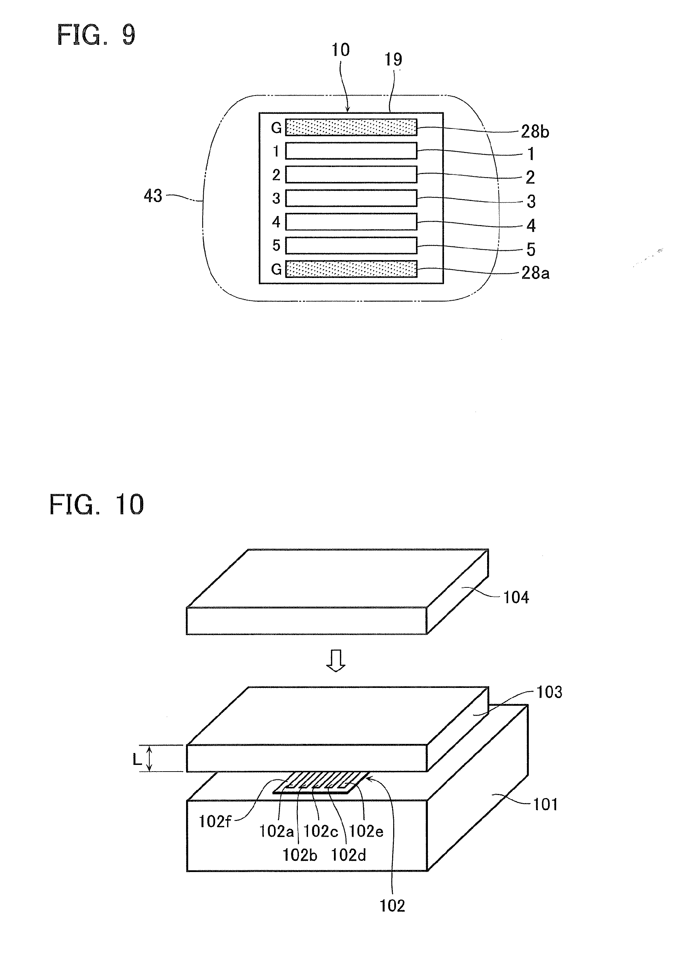

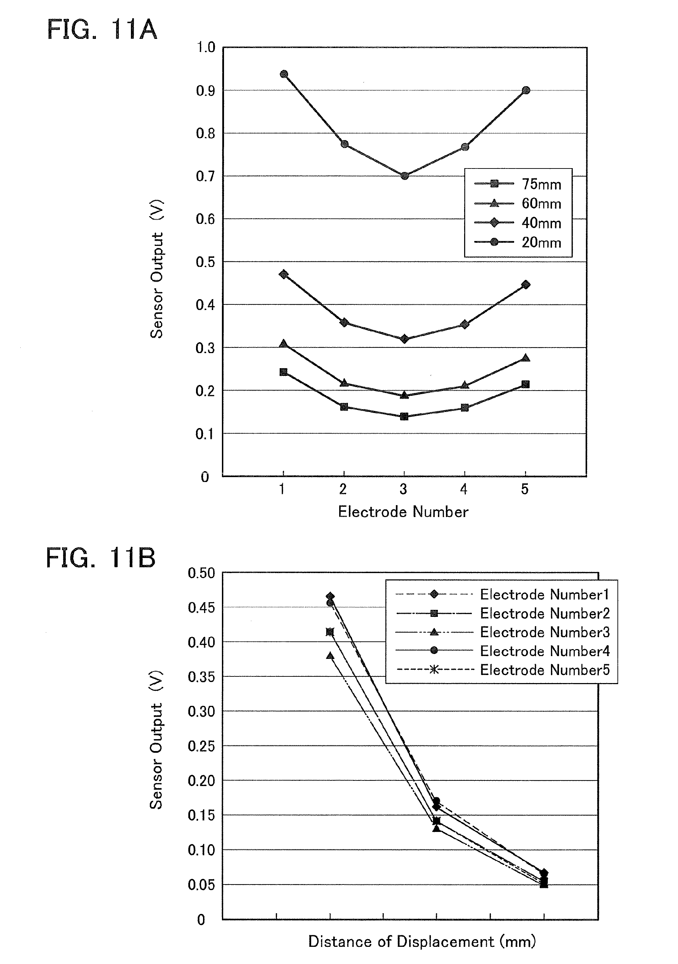

As an example, the configuration of a sample of an experiment carried out by the applicant herein is shown in Fig. 10, and the results of the experiment are shown in Figs. 11. In this experiment, as shown in Fig. 10, a sensor unit 102 configured by a plurality of sensor electrodes 102a to 102e formed on a substrate 102f was placed on a base 101 made of, for example, foamed polystyrene. A flat panel 104 supplied with a ground (GND) potential in the direction of an outline arrow of Fig. 10 was overlaid above the sensor unit 102 with a panel member 103 interposed therebetween that had a certain thickness L and was made of foamed polystyrene.

In this state where the distance between the sensor electrodes 102a to 102e of the sensor unit 102 and the flat panel 104 (the thickness L of the panel member 103) was constant, the outputs (V) of the sensor electrodes 102a to 102e versus the distance L between the sensor unit 102 and the flat panel 104 (see Fig. 11(a)) and the amount of change in the outputs (V) versus change in the distance L (see Fig. 11(b)) were measured.

In the graph of Fig. 11(a), the vertical axis indicates sensor output (V), and the horizontal axis indicates electrode numbers assigned to the sensor electrodes 102a to 102e (for example, electrode numbers 1 to 5 were assigned to the sensor electrodes 102a to 102e in this order). In the graph of Fig. 11(b), the vertical axis indicates sensor output (V), and the horizontal axis indicates distance of displacement (mm).

According to the results of measurement, when the distance L between the sensor unit 102 and the flat panel 104 was changed, for example, from 20mm to 40mm, 60 mm, and 75mm as shown in Fig. 11(a), the sensor outputs (V) of the sensor electrode 102a (electrode number 1) and sensor electrode 102e (electrode number 5) were the highest in the respective cases. That is, the outputs of the electrodes provided at the outermost positions in the direction of arrangement (the direction of side-by-side arrangement) of the sensor electrodes 102a to 102e were the highest.

When the amount of change L in the distance L was, for example, 20mm40mm, 40mm60mm, and 60mm75mm as shown in Fig. 11(b), changes in the capacitance value (=C) in the respective cases drew different trajectories for the different sensor electrodes 102a to 102e. Particularly, the differences of the trajectories represent differences in the amount of change in the output, and it was found that the group of dots indicating the sensor outputs of when, for example, the amount of change L was 20mm40mm fell within a range having a dispersion of about 100mV.

Hence, if such differences among the sensor electrodes 102a to 102e in the amount of change in the output are significant, it might be difficult to measure the distance between the sensing target and the sensor unit 102 accurately by the various sensing methods described above.

The present invention was made in view of this point, and aims for providing a capacitance-type sensor which can measure the distance between a sensing target and sensors accurately by suppressing differences in the amount of change in the outputs of the sensors and differences in the initial capacitances of the sensors, and which hence can detect the sensing target highly accurately.

### Means for Solving the Problem

A capacitance-type sensor according to the present invention is a capacitance-type sensor for sensing capacitances with respect to a sensing target existing in a sensing area, and includes: a sensor electrode group including a plurality of sensor electrodes provided on a substrate; and at least one pair of guard electrodes which are formed at at least some portions of a circumference of the sensor electrode group so as to sandwich therebetween the sensor electrode group.

By being configured as described above, the capacitance-type sensor according to the present invention can measure the distance between the sensing target and the sensors accurately by suppressing such differences in the amount of change in the outputs from the sensors and such differences in the initial capacitances of the sensors as are due to differences in the positions at which the plurality of sensor electrodes configuring the sensor electrode group are provided, and hence can detect the sensing target highly accurately.

For example, the plurality of sensor electrodes configuring the sensor electrode group are each driven by being supplied with a sensor potential or a guard potential equal or similar to the sensor potential, and the at least one pair of guard electrodes are driven by being supplied with the guard potential.

Preferably, the capacitance-type sensor according to the present invention further includes a detecting circuit which detects capacitance values of the sensing target based on outputs from the plurality of sensor electrodes. For example, the detecting circuit includes: switching means which switches between the sensor potential and the guard potential which are to be supplied to the plurality of sensor electrodes; and detecting means which supplies the sensor potential or the guard potential to the plurality of sensor electrodes through the switching means, supplies the guard potential to the at least one pair of guard electrodes, and detects capacitance values sensed by the sensor electrodes.
For example, when one of the plurality of sensor electrodes configuring the sensor electrode group is supplied with the sensor potential, the switching means performs switching so as for the other sensor electrodes to be supplied with the guard potential.

For example, the plurality of sensor electrodes configuring the sensor electrode group are formed into a rectangular strip shape and provided on the substrate in a side-by-side arrangement along their shorter direction.

In this case, for example, the at least one pair of guard electrodes are provided at both positions that are outside the plurality of sensor electrodes in a direction of the side-by-side arrangement.

For example, the plurality of sensor electrodes configuring the sensor electrode group are formed into a rectangular strip shape and provided on the substrate such that some of the plurality of sensor electrodes are provided in a side-by-side arrangement along their shorter direction, and the others of the plurality of sensor electrodes are provided in a side-by-side arrangement to make their shorter direction run along a direction orthogonal to that shorter direction.

In this case, for example, there are provided at least two pairs of guard electrodes. One pair of guard electrodes are provided at both positions that are outside the some of the plurality of sensor electrodes in a direction of their side-by-side arrangement, and another pair of guard electrodes are provided at both positions that are outside the others of the plurality of sensor electrodes in a direction of their side-by-side arrangement.

For example, the detecting means may detect capacitance values from the plurality of sensor electrodes in an order from one side of the direction of the side-by-side arrangement to the other side thereof.

For example, the detecting means may detect capacitance values from the plurality of sensor electrodes in an order of electrode numbers assigned to the sensor electrodes.

The detecting means may detect a surface shape of a sensing target based on capacitance values from the plurality of sensor electrodes.
In this case, it is preferred that the capacitance-type sensor include: a sensor electrode group including at least three sensor electrodes provided in a side-by-side arrangement along a direction to scan the surface shape of the sensing target; and one pair of guard electrodes provided at positions that are outside the sensor electrodes in a direction of their side-by-side arrangement.
It is also preferred that the sensor electrode group has the plurality of sensor electrodes provided in the side-by-side arrangement over at least 1/2 of a total length of the sensing target.

### Effect of the Invention

According to the present invention, it is possible to measure the distance between a sensing target and sensors accurately by suppressing differences in the amount of change in outputs from the sensors and differences in the initial capacitances of the sensors, and detect the sensing target highly accurately.

### Best Mode for Carrying Out the Invention

A preferred embodiment of a capacitance-type sensor according to the present invention will be explained below in detail with reference to the attached drawings.

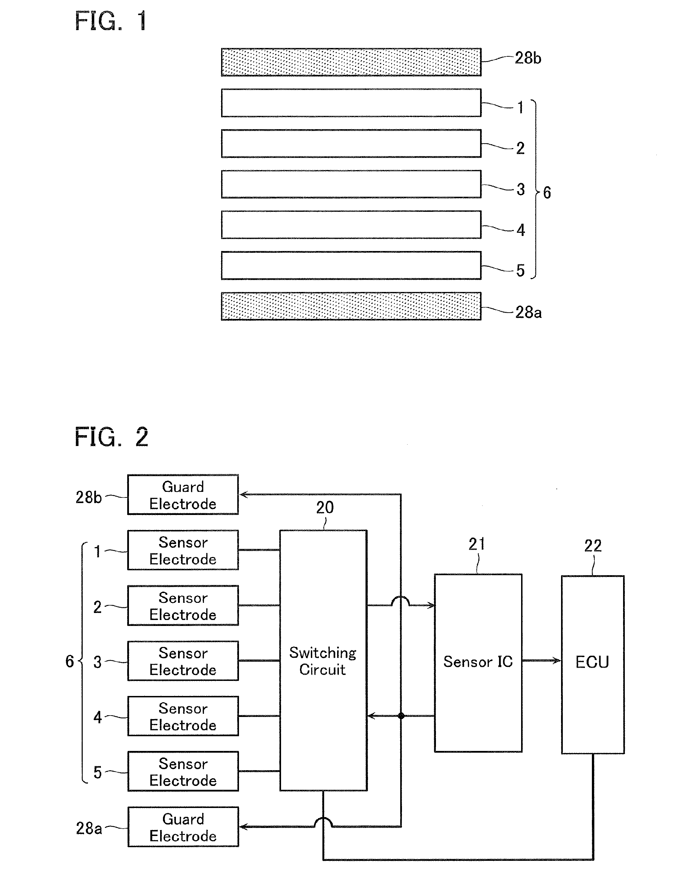

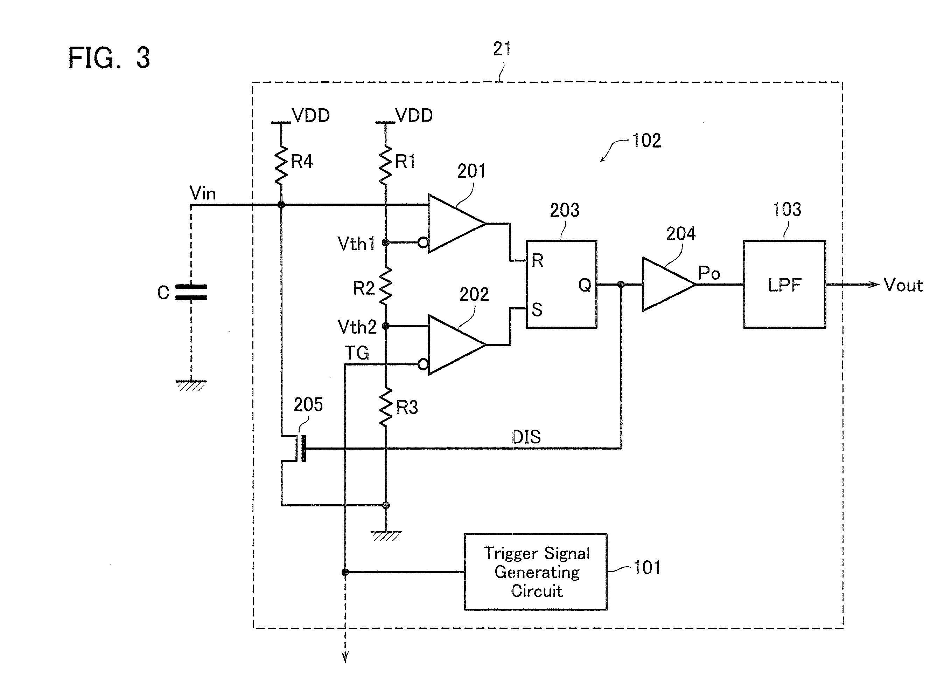

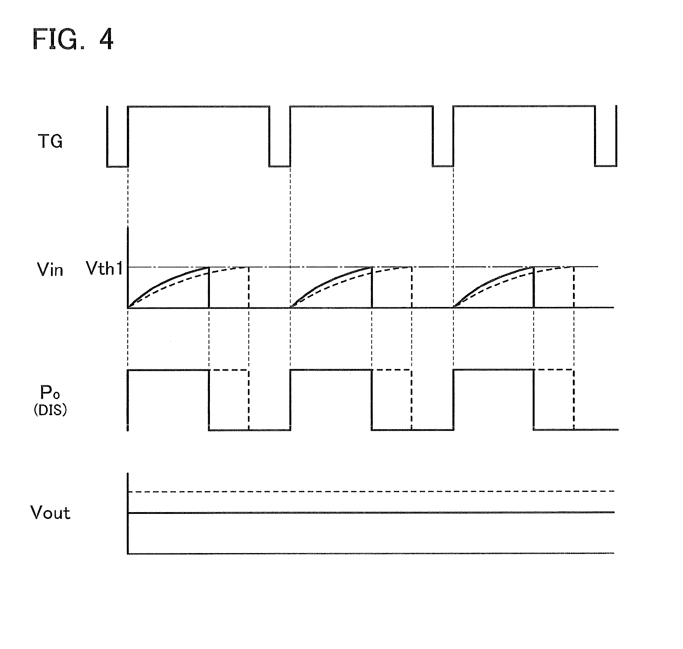

Fig. 1 is an explanatory diagram for explaining an example of an electrode configuration of a capacitance-type sensor according to one embodiment of the present invention. Fig. 2 is a block diagram showing an example of a whole configuration of the capacitance-type sensor. Fig. 3 is a block diagram showing an example of a configuration of a sensor IC of the capacitance-type sensor. Fig. 4 is an operation waveform chart showing examples of operation waveforms of the sensor IC of the capacitance-type sensor.

As shown in Fig. 1, the capacitance-type sensor according to one embodiment of the present invention includes: a sensor electrode group 6 including a plurality of sensor electrodes 1 to 5 formed into, for example, a rectangular strip shape and provided on an unillustrated substrate in a side-by-side arrangement along their shorter direction (a direction orthogonal to the longer direction); and a pair of (a set of) guard electrodes 28a and 28b which are formed contactless from the sensor electrodes 1 to 5 of the sensor electrode group 6, being provided at at least some portions of the circumference of the sensor electrode group 6 so as to sandwich therebetween the sensor electrode group 6 (i.e., at farther outer positions than the sensor electrodes (e.g., the sensor electrodes 1 and 5) provided at the side-by-side arrangement direction outermost positions among the sensor electrodes 1 to 5 of the sensor electrode group 6).

The capacitance-type sensor senses capacitances with respect to a sensing target existing in a sensing area by means of the sensor electrodes 1 to 5 configuring the sensor electrode group 6 and provided in this way. The sensor electrodes 1 to 5 are each driven by being supplied with a certain sensor potential or a guard potential equal or similar to the sensor potential. The guard electrodes 28a and 28b are supplied with the gourd potential constantly.

The sensor electrodes 1 to 5 and the guard electrodes 28a and 28b are formed and provided on a substrate made of, for example, a flexible printed board, a rigid substrate or a rigid flexible substrate. The sensor electrodes 1 to 5 and the guard electrodes 28a and 28b are made of a conductive material such as copper, copper alloy, aluminum, or the like patterned on the substrate made of an insulator such as polyethylene terephthalate (PET), polyethylene naphthalate (PEN), polyimide (PI), polyamide (PA), glass epoxy resin, or the like, or merely made of a conductive material such as an electric wire or the like laid on the substrate.

The sensor electrodes 1 to 5 configuring the sensor electrode group 6 are assigned, for example, electrode numbers 1 to 5 respectively. There are provided five sensor electrodes 1 to 5 here, but, for example, more than five electrodes may be provided.
The guard electrodes 28a and 28b are provided on the same substrate as that on which the sensor electrode group 6 is provided. In this case, the guard electrodes 28a and 28b may be provided on any of the same surface as or the opposite surface to the surface on which the sensor electrode group 6 is provided. The guard electrodes 28a and 28b may be provided on the substrate via an insulating material.

As shown in Fig. 2, the sensor electrodes 1 to 5 configuring the sensor electrode group 6 are connected to a detecting circuit which detects capacitance values of a sensing target based on outputs from these sensor electrodes 1 to 5. The detecting circuit includes: a switching circuit 20 which switches between the sensor potential and the gourd potential which are to be supplied to the sensor electrodes 1 to 5; and a sensor IC 21 which supplies the sensor potential or the guard potential to the sensor electrodes 1 to 5 through the switching circuit 20 and detects capacitance values sensed by the sensor electrodes 1 to 5. The sensor IC 21 supplies the guard potential to the guard electrodes 28a and 28b constantly.

The detecting circuit also includes an ECU (Electronic Control Unit) 22 which controls the switching circuit 20 based on outputs from the sensor IC 21 and performs various processes based on the outputs. The switching circuit 20 is configured by, for example, a plurality of FETs, a plurality of analog switches, or a plurality of multiplexors which are configured to enable the sensor potential and the guard potential from the sensor IC 21 to be supplied switched therebetween to each of the sensor electrodes 1 to 5.

For example, when one sensor electrode (for example, the sensor electrode 1) of the sensor electrodes 1 to 5 configuring the sensor electrode group 6 is supplied with the sensor potential, the switching circuit 20 switches the potential to be output from the sensor IC 21 so as for the other sensor electrodes (for example, the sensor electrodes 2 to 5) to be supplied with the guard potential.

The sensor IC 21 detects the capacitance values from the sensor electrodes 1 to 5 of the sensor electrode group 6 by scanning the electrodes, for example, in an order from one side to the other side of the side-by-side arrangement direction (for example, in an intertemporal order from the electrode number 1 to the electrode number 5), or by scanning the electrodes in a preset order among the electrode numbers (for example, in an intertemporal order from an electrode number 1 to 3 to 5 to 2 to 4).

For example, the sensor IC 21 generates a pulse signal having a duty ratio which changes according to the capacitances between the sensor electrodes 1 to 5 of the sensor electrode group 6 and a sensing target (unillustrated), and smoothes the pulse signal and outputs it. The ECU 22 includes, for example, a CPU, a RAM, a ROM, etc., and performs various processes using the capacitance values detected by the sensor IC 21.

As shown in Fig. 3, the sensor IC 21 changes its duty ratio according to a capacitance C, and includes: a trigger signal generating circuit 101 which outputs a trigger signal TG having, for example, a constant period; a timer circuit 102 which outputs a pulse signal Po having a duty ratio which changes according to the level of the capacitance C connected to an input terminal; and a low-pass filter (LPF) 103 which smoothes the pulse signal Po.

For example, the timer circuit 102 includes: two comparators 201 and 202; an RS flip-flop (hereinafter referred to as "RS-FF" ) 203 which receives outputs of the comparators 201 and 202 at its reset terminal R and its set terminal S respectively; a buffer 204 which outputs an output DIS of the RS-FF 203 to the LPF 103; and a transistor 205 which is controlled between on and off according to the output DIS of the RS-FF 203.

The comparator 202 compares such a trigger signal TG as shown in Fig. 4 which is output by the trigger signal generating circuit 101 with a certain threshold Vth2 divided by resistors R1, R2, and R3, and outputs a set pulse synchronized with the trigger signal TG. This set pulse sets a Q output of the RS-FF 203.

The Q output as a discharge signal DIS turns off the transistor 205, and electrically charges between the sensor electrode 1 (2 to 5) and a ground at a speed defined by a time constant set by the to-ground capacitance C of the senor electrode 1 (2 to 5) and a resistor R4 connected between the input terminal and a power supply line. Accordingly, the potential of an input signal Vin rises at a speed defined by the capacitance C.

When the input signal Vin exceeds a threshold Vth1 defined by the resistors R1, R2, and R3, the output of the comparator 201 is inverted, thereby inverting the output of the RS-FF 203. As a result, the transistor 205 is turned on, and the charges accumulated in the sensor electrode 1 (2 to 5) are discharged through the transistor 205.

Hence, the timer circuit 102 outputs a pulse signal Po which, as shown in Fig. 4, oscillates at a duty ratio that is based on the capacitance C between the sensor electrode 1 (2 to 5) and a sensing target (unillustrated) existing in the sensing area. The LPF 103 outputs a direct-current signal Vout shown in Fig. 4 by smoothing the pulse signal Po. Note that in Fig. 4, a waveform indicated by a solid line and a waveform indicated by a dotted line show that the former has a smaller capacitance than that of the latter, and, for example, the latter represents a condition that an object is coming close.

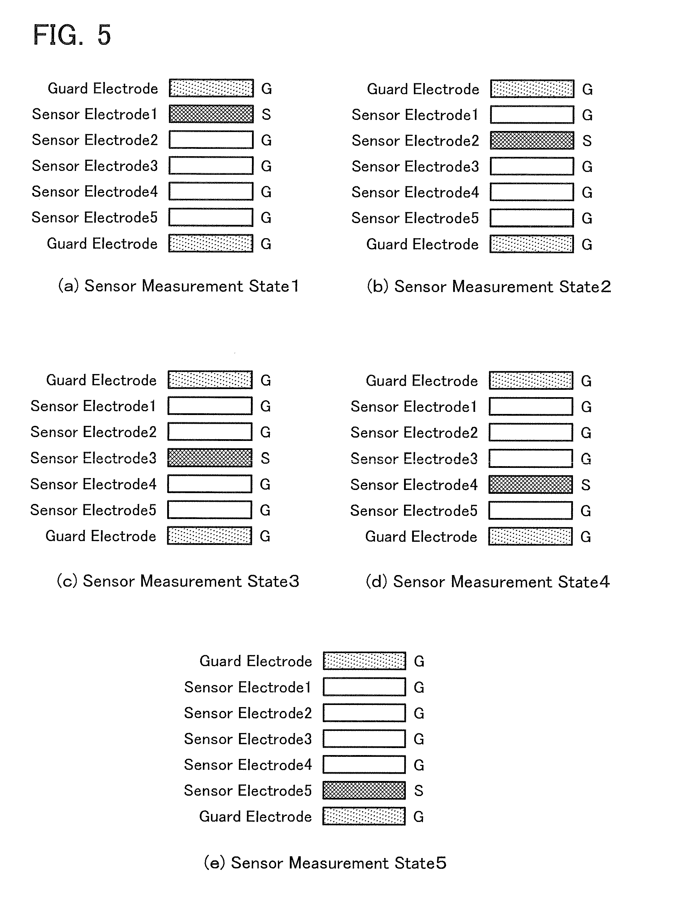

Specifically, the capacitance-type sensor having such a configuration senses the capacitance C with respect to a sensing target by the following operation. Figs. 5 are explanatory diagrams for explaining an example of the operation of the capacitance-type sensor according to one embodiment of the present invention. In Figs. 5, the symbol "S" indicates the sensor potential and "G" indicates the guard potential.

First, when the sensor electrode 1 of the sensor electrode group 6 is activated by the switching circuit 20 under the control of the ECU 22, the guard potential is supplied to the other sensor electrodes 2 to 5 and the pair of guard electrodes 28a and 28b to bring a "sensor measurement state 1" as shown in Fig. 5(a).

Next, when the sensor electrode 2 of the sensor electrode group 6 is activated, the guard potential is supplied to the other sensor electrodes 1 and 3 to 5 and the pair of guard electrodes 28a and 28b to bring a "sensor measurement state 2" as shown in Fig. 5(b). Then, when the sensor electrode 3 of the sensor electrode group 6 is activated, the guard potential is supplied to the other sensor electrodes 1, 2, 4, and 5 and the pair of guard electrodes 28a and 28b to bring a "sensor measurement state 3" as shown in Fig. 5(c).

When the sensor electrode 4 of the sensor electrode group 6 is activated, the guard potential is supplied to the other sensor electrodes 1 to 3 and 5 and the pair of guard electrodes 28a and 28b to bring a "sensor measurement state 4" as shown in Fig. 5(d). Likewise, when the sensor electrode 5 of the sensor electrode group 6 is activated, the guard potential is supplied to the other sensor electrodes 1 to 4 and the pair of guard electrodes 28a and 28b to bring a "sensor measurement state 5" as shown in Fig. 5(e).

In this way, the pair of guard electrodes 28a and 28b are driven at the guard potential constantly while the sensor electrodes 1 to 5 of the sensor electrode group 6 are activated sequentially. Therefore, even when, for example, the sensor electrode 1 or 5 provided at the outermost position among the sensor electrode group 6 is activated, it is possible to realize a state where there exist electrodes at the guard potential on both sides (side-by-side arrangement direction both sides) of the sensor electrode 1 or 5. Accordingly, it is possible to suppress electrical capacitance coupling toward the outside of the sensor electrode group 6.

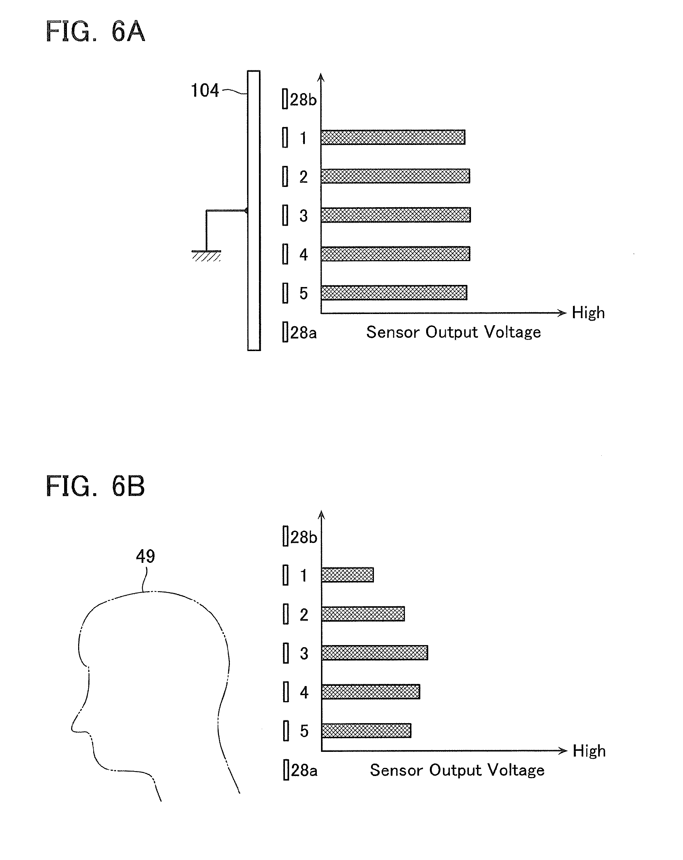

That is, when measurements were carried out on the same condition as that explained above with reference to Fig. 10 and Figs. 11, sensor output voltages of the sensor electrodes 1 to 5 of the sensor electrode group 6 turned out to be substantially uniform (i.e., the sensor sensitivities were substantially uniform), as shown in Fig. 6(a). Moreover, when a head 49 of a human body was measured as shown in Fig. 6(b), there occurred differences in the sensor output voltages of the sensors 1 to 5 of the sensor electrode group 6, and hence it was possible to detect the occipital shape (i.e., a non-flat shape) of the head 49 securely.

Hence, the capacitance-type sensor according to the present embodiment can measure the distance between the sensing target and the sensor electrodes 1 to 5 accurately by suppressing differences in the amount of change in the outputs from the sensor electrodes 1 to 5 configuring the sensor electrode group 6 and differences in the initial capacitances of the sensor electrodes 1 to 5 and hence can detect the sensing target highly accurately. The pair of guard electrodes 28a and 28b may have the same area as that of the sensor electrodes 1 to 5 configuring the sensor electrode group 6 or a larger area than that.

When detecting the surface shape of a sensing target (for example, the occipital shape of the head 49) based on capacitance values from a plurality of sensor electrodes as described above, it is preferable that at least three sensor electrodes be provided in a side-by-side arrangement along a direction to scan the surface shape of the sensing target, and that a pair of guard electrodes be provided at both positions that are outside the sensor electrodes in their side-by-side arrangement direction. The sensor electrode group 6 is provided such that its sensor electrodes are provided in the side-by-side arrangement over at least 1/2 or preferably 3/4 or longer of the total length of the sensing target.

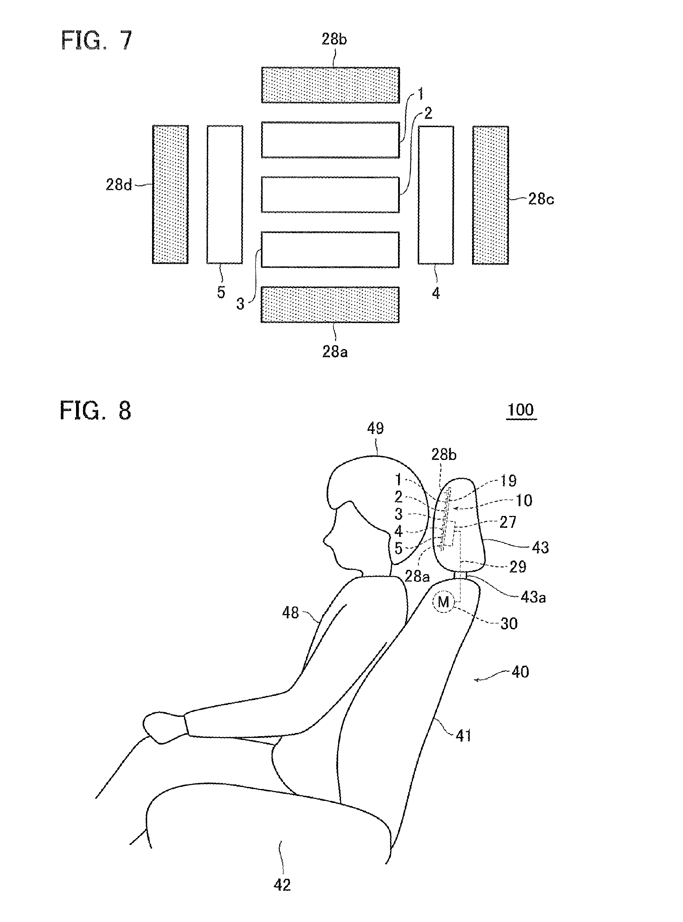

Fig. 7 is an explanatory diagram for explaining another example of the electrode configuration of the capacitance-type sensor according to one embodiment of the present invention. In the following description, any portions that are the same as the portions already explained will be denoted by the same reference numerals and will not be explained, and any portions that are not particularly relevant to the present invention might not be set forth.

As shown in Fig. 7, the capacitance-type sensor according to the present example is provided on a substrate such that some electrodes (for example, sensor electrodes 1 to 3) of the sensor electrodes 1 to 5 configuring the sensor electrode group 6 are provided in a side-by-side arrangement along their shorter direction and the others (for example, the sensor electrodes 4 and 5) are provided in a side-by-side arrangement to make their shorter direction run along a direction orthogonal to the side-by-side arrangement direction (i.e., the shorter direction) of the sensor electrodes 1 to 3 (here, in a state sandwiching therebetween the sensor electrodes 1 to 3).

The present capacitance-type sensor includes at least two pairs of guard electrodes. One pair of guard electrodes 28a and 28b are provided at positions that are farther outside the sensor electrodes 1 to 3 in their side-by-side arrangement direction, and another pair of guard electrodes 28c and 28d are provided at positions that are farther outside the sensor electrode 4 and 5 in their side-by-side arrangement direction. With this configuration of the sensor electrode group 6, it becomes possible to detect outputs of not only the side-by-side arrangement direction of the sensor electrodes 1 to 3 but also the side-by-side arrangement direction of the sensor electrodes 4 and 5 by suppressing differences in the amount of change in the outputs and differences in the initial capacitances. Other workings and effects are the same as described above, and will not be explained here.

Fig. 8 is an explanatory diagram showing an example in which the capacitance-type sensor according to one embodiment of the present invention is applied to a headrest position adjusting device for a seat, and Fig. 9 is an explanatory diagram showing a portion in a headrest extracted from the headrest position adjusting device. As shown in Fig. 8 and Fig. 9, the capacitance-type sensor according to the present embodiment is configured as a sensor unit 10 and employed in the headrest position adjusting device 100.

The headrest position adjusting device 100 is provided, for example inside a headrest 43 of a seat 40 of a vehicle, etc., and includes: a sensor unit 10 including the sensor electrodes 1 to 5 configuring the sensor electrode group 6 and the pair of guard electrodes 28a and 28b which are provided in a front portion of the headrest 43 in a side-by-side arrangement along the height direction of the headrest 43; and a drive motor unit 30 which is provided in, for example, a backrest 41 of the seat 40.

Here, the sensor unit 10 and the drive motor unit 30 are electrically connected through a harness 29. The sensor unit 10 and the drive motor unit 30 may be configured controllable wirelessly, etc.

The sensor unit 10 includes: the sensor electrodes 1 to 5 and the guard electrodes 28a and 28b which are formed on one surface of a substrate 19; and a detecting circuit unit 27 or the like which is provided, for example, on the other surface of the substrate 19 and includes the switching circuit 20 and sensor IC 21 (unillustrated) described above. The sensor unit 10 senses capacitances between a head (sensing target) 49 of a human body 48 sitting on a sitting portion 42 of the seat 40 and the headrest 43 (specifically, the sensor electrodes 1 to 5 of the sensor electrode group 6).

The sensor IC 21 of the detecting circuit unit 20 detects capacitance values based on sensing signals from the sensor electrodes 1 to 5, and outputs information regarding the detected results to the ECU 22 (unillustrated). The ECU 22 detects the sensor electrode having output, for example, a signal having the highest value among the sensor electrodes 1 to 5 based on the information input thereto, derives the center position (estimated center position) of the head 49 that is estimated by calculation according to the detected results, and outputs drive information for the headrest 43 according to the estimation result to the drive motor unit 30.

In response to the output from the ECU 22, the drive motor unit 30 moves a support shaft 43a by which the headrest 43 is supported on the backrest 41 in, for example, upward and downward, leftward and rightward, or frontward and rearward directions to adjust the position (for example, the height-direction center position) of the headrest 43 to an appropriate position for the head 49. Specifically, for example, the drive motor unit 30 adjusts the position of one detected sensor electrode to face the height-direction center position of the headrest 43 horizontally straight, adjusts the position of the sensor electrode to come above the height-direction center position of the headrest 43 by some degree, or generates profile information about the shape of the head 49 based on the detected results and adjusts the headrest 43 to an appropriate position based on the profile information.

Since the headrest position adjusting device 100 having this configuration employs the sensor unit 10 including the capacitance-type sensor according to the above-described embodiment, it can detect the sensing target highly accurately and adjust the position of the headrest 43 to an appropriate position automatically. Therefore, when the seat 40 is mounted on, for example, a vehicle, the device can prevent accidents due to failure to adjust the position of the headrest 43 such as cervical spine injury in a car crash, etc.

As described above, the capacitance-type sensor according to the embodiment described above can measure the distance between a sensing target and sensors accurately by suppressing differences in the amount of change in the outputs from the sensor electrodes 1 to 5 configuring the sensor electrode group 6 and differences in the initial capacitances of the sensor electrodes 1 to 5 and detect the sensing target highly accurately.

### Brief Description of the Drawings

[Fig.1] Fig. 1 is an explanatory diagram for explaining an example of an electrode configuration of a capacitance-type sensor according to one embodiment of the present invention.
[Fig. 2] Fig. 2 is a block diagram showing an example of a whole configuration of the capacitance-type sensor.
[Fig. 3] Fig. 3 is a block diagram showing an example of a configuration of a sensor IC of the capacitance-type sensor.
[Fig. 4] Fig. 4 is an operation waveform chart showing examples of operation waveforms of the sensor IC of the capacitance-type sensor.
[Figs. 5] Figs. 5 are explanatory diagrams for explaining an example of an operation of the capacitance-type sensor according to one embodiment of the present invention.
[Figs. 6] Figs. 6 are explanatory diagrams showing measurement results of the capacitance-type sensor according to one embodiment of the present invention.
[Fig. 7] Fig. 7 is an explanatory diagram for explaining another example of the electrode configuration of the capacitance-type sensor according to one embodiment of the present invention.
[Fig. 8] Fig. 8 is an explanatory diagram showing an example in which the capacitance-type sensor according to one embodiment of the present invention is applied to a headrest position adjusting device for a seat.
[Fig. 9] Fig. 9 is an explanatory diagram showing a portion in a headrest extracted from the headrest position adjusting device.
[Fig. 10] Fig. 10 is a diagram showing a configuration of a sample of an experiment carried out by the applicant.
[Figs. 11] Figs. 11 are diagrams showing experimental results of the experiment carried out by the applicant.

### Description of Reference Numerals

- 1 to 5: sensor electrode
- 6: sensor electrode group
- 10: sensor unit
- 20: switching circuit
- 21: sensorIC
- 22: ECU
- 27: detecting circuit unit
- 28a, 28b, 28c, 28d: guard electrode
- 29: harness
- 30: drive motor unit
- 40: seat
- 41: backrest
- 42: sitting portion
- 43: headrest
- 43a: support shaft
- 48: human body
- 49: head
- 100: headrest position adjusting device

## Claims

1. A capacitance-type sensor for sensing capacitances with respect to a sensing target existing in a sensing area, comprising:
a sensor electrode group including a plurality of sensor electrodes provided on a substrate; and
at least one pair of guard electrodes which are formed at at least some portions of a circumference of the sensor electrode group so as to sandwich therebetween the sensor electrode group.

2. The capacitance-type sensor according to claim 1,
wherein the plurality of sensor electrodes configuring the sensor electrode group are each driven by being supplied with a sensor potential or a guard potential equal or similar to the sensor potential, and the at least one pair of guard electrodes are driven by being supplied with the guard potential.

3. The capacitance-type sensor according to claim 2, further comprising a detecting circuit which detects capacitance values of the sensing target based on outputs from the plurality of sensor electrodes,
wherein the detecting circuit includes: switching means which switches between the sensor potential and the guard potential which are to be supplied to the plurality of sensor electrodes; and detecting means which supplies the sensor potential or the guard potential to the plurality of sensor electrodes through the switching means, supplies the guard potential to the at least one pair of guard electrodes, and detects capacitance values sensed by the sensor electrodes.

4. The capacitance-type sensor according to claim 3,
wherein when one of the plurality of sensor electrodes configuring the sensor electrode group is supplied with the sensor potential, the switching means performs switching so as for the other sensor electrodes to be supplied with the guard potential.

5. The capacitance-type sensor according to any one of claims 1 to 4,
wherein the plurality of sensor electrodes configuring the sensor electrode group are formed into a rectangular strip shape and provided on the substrate in a side-by-side arrangement along their shorter direction.

6. The capacitance-type sensor according to claim 5,
wherein the at least one pair of guard electrodes are provided at both positions that are outside the plurality of sensor electrodes in a direction of the side-by-side arrangement.

7. The capacitance-type sensor according to any one of claims 1 to 4,
wherein the plurality of sensor electrodes configuring the sensor electrode group are formed into a rectangular strip shape and provided on the substrate such that some of the plurality of sensor electrodes are provided in a side-by-side arrangement along their shorter direction, and the others of the plurality of sensor electrodes are provided in a side-by-side arrangement to make their shorter direction run along a direction orthogonal to that shorter direction.

8. The capacitance-type sensor according to claim 7,
wherein there are provided at least two pairs of guard electrodes, one pair of guard electrodes being provided at both positions that are outside the some of the plurality of sensor electrodes in a direction of their side-by-side arrangement, and another pair of guard electrodes being provided at both positions that are outside the others of the plurality of sensor electrodes in a direction of their side-by-side arrangement.

9. The capacitance-type sensor according to any one of claims 3 to 6,
wherein the detecting means detects capacitance values from the plurality of sensor electrodes in an order from one side of a direction of the side-by-side arrangement to the other side thereof.

10. The capacitance-type sensor according to claims 3 to 7,
wherein the detecting means detects capacitance values from the plurality of sensor electrodes in an order of electrode numbers assigned to the sensor electrodes.

11. The capacitance-type sensor according to claims 3 to 10,
wherein the detecting means detects a surface shape of a sensing target based on capacitance values from the plurality of sensor electrodes.

12. The capacitance-type sensor according to claim 11, comprising:
a sensor electrode group including at least three sensor electrodes provided in a side-by-side arrangement along a direction to scan the surface shape of the sensing target; and
one pair of guard electrodes provided at both positions that are outside the sensor electrodes in a direction of their side-by-side arrangement.

13. The capacitance-type sensor according to claim 11 or 12,
wherein the sensor electrode group has the plurality of sensor electrodes provided in the side-by-side arrangement over at least 1/2 of a total length of the sensing target.
